# EUROPÄISCHE PATENTANMELDUNG

(11) **EP 1 736 385 A2**
(43) Veröffentlichungstag der Anmeldung: **27.12.2006**
(21) Anmeldenummer: 06114630.4
(22) Anmeldetag: 29.05.2006
(51) Int. Cl.: B60S 1/08, B60S 1/16, B60S 1/18

(54) **Antrieb für eine Scheibenwischanlage eines Fahrzeugs**

(30) Priorität: 22.06.2005 DE 102005028813
(71) Anmelder: ROBERT BOSCH GMBH, 70442 Stuttgart (DE)
(72) Erfinder: Hawighorst, Achim, 77830 Buehlertal (DE); Stubner, Armin, 77815 Buehl-Altschweier (DE)

(57) **Zusammenfassung**

Es wird ein Antrieb für eine Scheibenwischanlage eines Fahrzeugs vorgeschlagen, mit einem Antriebsmotor (20), dessen Motorantriebswelle (18) in Wirkverbindung mit einem Übertragungselement (12) steht, das drehfest mit einer Abtriebswelle (24) eines Wischerarms der Scheibenwischanlage verbunden ist. Der Abtriebswelle (24) ist eine definierte bzw. definierbare Winkellage des Wischerarms zugeordnet. Der erfindungsgemäße Antrieb zeichnet sich dadurch aus, dass die Winkellage einer Parkstellung eines Wischerarms mit einem Schaltelement (28) des Übertragungselements definierbar ist, wobei mit dem Schaltelement (28) ein elektrischer Kontakt (34,36) schaltbar ist.

## Beschreibung

Die vorliegende Erfindung betrifft einen Antrieb für eine Scheibenwischanlage eines Fahrzeugs gemäß Oberbegriff von Anspruch 1.

Bei Scheibenwischanlagen von Fahrzeugen wird üblicherweise eine Drehbewegung eines elektrischen Antriebsmotors in eine oszillierende Schwenkbewegung wenigstens eines Wischerarms umgewandelt. Da der Wischerarm bei Beenden eines Wischvorgangs in der Regel eine definierte Endlage (Parklage) am unteren Rand einer Windschutzscheibe des Fahrzeugs einnimmt, muss eine Einrichtung vorgesehen sein, die beim Abschalten der Scheibenwischanlage für eine Ablage des Wischerarms in dieser Parklage sorgt.

Bekannte Einrichtungen zur Definition der Parklage des Wischerarms umfassen elektrische Schleifkontakte mit zugeordneten Kontaktscheiben, die über eine Schalteinrichtung betätigt werden, die in einem Getriebe zwischen elektrischem Antriebsmotor und Wischerarmabtriebswelle angeordnet ist. Für unterschiedliche Ausführungen von Wischanlagen, die für unterschiedliche Fahrzeugtypen individuell angepasst sein müssen, sind jeweils unterschiedliche Schwenkbereiche und damit unterschiedliche Auslösemechaniken zur Definition der Parkstellung notwendig.

Eine Aufgabe der vorliegenden Erfindung besteht darin, einen Antrieb für eine Scheibenwischanlage eines Fahrzeugs bereit zu stellen, bei dem auf einfache Weise eine Parkstellung eines Wischerarms definierbar ist.

Diese Aufgabe wird mit dem Gegenstand von Anspruch 1 gelöst. Bevorzugte Weiterbildungen der Erfindung sind in abhängigen Ansprüchen definiert.

Ein Antrieb für eine Scheibenwischanlage eines Fahrzeuges gemäß der vorliegenden Erfindung umfasst einen Antriebsmotor, dessen Motorantriebswelle in Wirkverbindung mit einem Übertragungselement steht, das drehfest mit einer Abtriebswelle eines Wischerarms der Scheibenwischanlage verbunden ist. Der Abtriebswelle ist eine definierte bzw. definierbare Winkellage des Wischerarms zugeordnet. Der erfindungsgemäße Antrieb zeichnet sich dadurch aus, dass die Winkellage einer Parkstellung des Wischerarms mit einem Schaltelement des Übertragungselements definierbar ist, wobei mit dem Schaltelement ein elektrischer Kontakt schaltbar ist.

Vorteilhaft resultiert aus der Definierbarkeit der Winkellage der Parkstellung des Wischerarms mit Hilfe des Schaltelements eine hohe Langzeitstabilität der Parkstellung. Durch das Schalten des elektrischen Kontakts mittels des Schaltelements ist ein Parkstellungslauf der Scheibenwischanlage vorteilhaft genau durchführbar. Gegenüber herkömmlichen Antrieben, bei denen ein Parkstellungslauf mittels Schleifkontakten und Kontaktscheiben durchgeführt wird, ergibt sich mit dem erfindungsgemäßen Antrieb ein geringerer Verschleiß und damit eine langfristig verbesserte Konstanz des Parkstellungslaufs. Weiterhin entfällt die Notwendigkeit, jeweils individuelle Bauteile für die im Stand der Technik bekannten Parkstellungssysteme bereitzustellen. Mithilfe des erfindungsgemäßen Antriebs kann auf diese Weise ein Rationalisierungspotential ausgeschöpft werden, wobei das Übertragungselement zu einem Baukastenteil wird, das für unterschiedliche Baugrößen des Antriebs einheitlich verwendet werden kann. Individuelle Schaltzeiten für den Antrieb sind vorteilhaft einfach realisierbar.

Bei einer Weiterbildung der Erfindung kann das Schaltelement insbesondere als Schaltnoppen- bzw. zapfen an einer Flachseite des Übertragungselements ausgebildet sein. Der Schaltnoppen wirkt mit einer beweglich aufgehängten Schalteinrichtung zusammen, bei dessen Auslenkung ein zu schaltender elektrischer Kontakt geöffnet oder geschlossen wird. Hierzu kann an einem freien Ende des Schalters vorzugsweise wenigstens eine Kontaktfläche angeordnet sein.

Mit dem erfindungsgemäßen Antrieb wird eine einfach aufgebaute Möglichkeit zur Verfügung gestellt, Parklagen für Wischerarme zu definieren. Die Abmessungen und Einbaupositionen des Schaltnoppens sowie der vorzugsweise als Bügel ausgebildeten Schalteinrichtung definieren die Parklage, so dass geringe Modifikationen ausreichen, um die Wischeranlage an unterschiedliche Fahrzeugtypen und Einbauverhältnisse anzupassen. Hierzu muss in der Regel lediglich die Schalteinrichtung leicht modifiziert werden, während das Übertragungselement meist unverändert bleiben kann. Die Erfindung ermöglicht dadurch die einheitliche Verwendung von Standardbauteilen, so dass eine Komponentenvielfalt in Bezug auf unterschiedliche Fahrzeugtypen vorteilhaft deutlich reduziert werden kann.

Das als Scheibe ausgebildete Übertragungselement kann eine Außenverzahnung aufweisen, die mit einer Schneckenverzahnung der Motorabtriebswelle im Eingriff steht. Auf dieser Weise wird eine Getriebeübersetzung zwischen schnelldrehender Motorabtriebswelle und langsam schwenkendem Wischerarm erreicht. Der elektrische Antriebsmotor ist vorzugsweise als ein als Rundläufer ausgebildeter Gleichstrommotor ausgebildet, der nur in eine Richtung dreht. Eine Umkehr der Drehrichtung ist bei diesem Motortyp außer aufgrund von äußeren Einwirkungen, beispielsweise infolge einer Schneelast in einem Randbereich der Windschutzscheibe, nicht vorgesehen.

Die als ein flexibler Bügel ausgebildete Schalteinrichtung ist vorzugsweise in einer zur Flachseite des Übertragungselementes parallelen Ebene verschwenkbar. Der Bügel kann insbesondere aus Federstahl oder einem ähnlich niederohmigen Material ausgebildet sein, das einer großen Anzahl von Biegewechselbelastungen standhält. Die Scheibe mit dem daran angeordneten Schaltnoppen kann insbesondere aus einem Kunststoffmaterial bestehen, so dass sie sich in einfacher Weise in einem Spritzgussverfahren herstellen lässt. Scheibe, Bügel, Kontakte und Teile der Motorabtriebswelle sind vorzugsweise von einem Gehäusedeckel umschlossen.

Gegebenenfalls kann der Bügel eine muldenartige Aufnahme für den Schaltnoppen aufweisen, deren Dimensionierung vorteilhaft an Kundenwünsche angepasst werden kann. Beispielhaft kann die muldenartige Aufnahme zumindest eine doppelte Breite des Durchmessers des Schaltnoppens aufweisen. Auf diese Weise kann verhindert werden, dass der Mitnehmer über einen Auslösepunkt für die Parkstellung hinausdreht und dadurch die Kontakte in unbeabsichtigter Weise betätigt werden, so dass nicht ungewollt eine weitere Schwenkbewegung des Wischerarms erfolgt. Die muldenartige Aufnahme bildet in Zusammenwirkung mit dem Schaltnoppen vorzugsweise eine Raststellung, da der Schaltnoppen nach Überwindung eines Absatzes durch leichte Federkraft in der Aufnahme gehalten wird.

Eine bevorzugte Ausführungsform der Erfindung zeichnet sich dadurch aus, dass der Antrieb in einen Gehäusedeckel montiert bzw. mittels eines Spritzgußprozesses in diesen integriert wird.

Die Erfindung wird nachfolgend anhand mehrerer bevorzugter Ausführungsbeispiele unter Bezugnahme auf die beiliegenden Zeichnungen näher erläutert. Dabei zeigt:
- Figur 1: ein erstes Ausführungsbeispiel des erfindungsgemäßen Antriebs;
- Figur 2: ein zweites Ausführungsbeispiel des erfindungsgemäßen Antriebs;
- Figur 3: ein drittes Ausführungsbeispiel des erfindungsgemäßen Antriebs;
- Figur 4: ein viertes Ausführungsbeispiel des erfindungsgemäßen Antriebs;
- Figur 5: Details einer Schalteinrichtung gemäß der vorliegenden Erfindung;
- Figur 6: ein fünftes Ausführungsbeispiel des erfindungsgemäßen Antriebs;
- Figur 7A: eine Variante der Schalteinrichtung und der geschalteten elektrischen Kontakte; und

- Figur 7B: eine weitere Variante der Schalteinrichtung und der geschalteten elektrischen Kontakte.

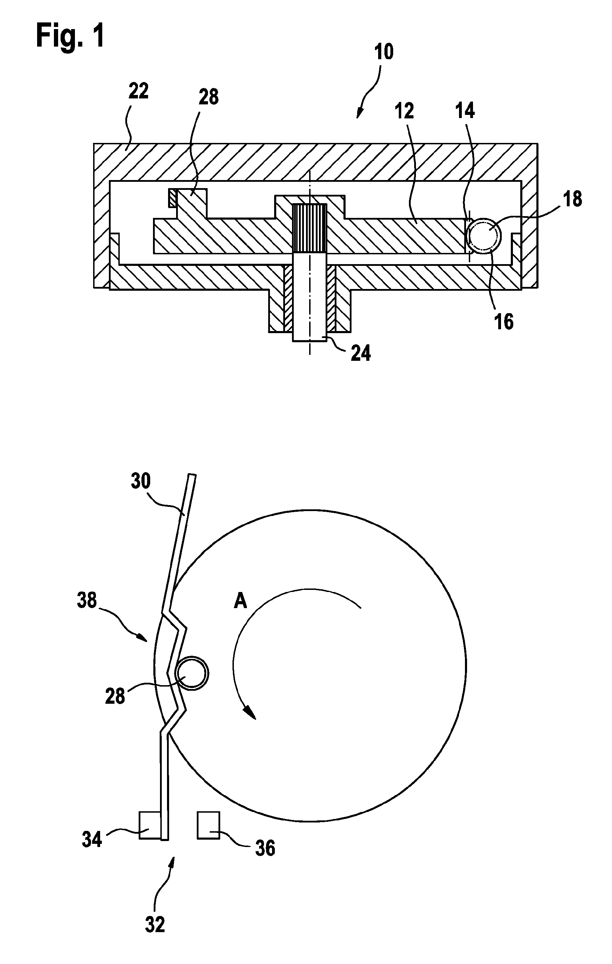

Ein Getriebe 10 eines Antriebs für eine Scheibenwischanlage entsprechend den Figuren 1 bis 4 umfasst einen Rotationskörper in Gestalt einer Scheibe 12 mit einer Außenverzahnung 14, die mit einer Schneckenverzahnung 16 einer Motorantriebswelle 18 eines elektrischen Antriebsmotors 20 (nicht dargestellt) des Wischerantriebs zusammenwirkt. Die Scheibe 12 ist drehbar in einem Getriebegehäuse gelagert und drehfest mit einer Abtriebswelle 24 eines Wischerarms (nicht dargestellt) verbunden, die aus dem Getriebegehäuse herausgeführt ist. Eine Drehrichtung der Abtriebswelle 24 bzw. der Scheibe 12 ist mit A bezeichnet und verläuft gegen den Uhrzeigersinn.

Die Scheibe 12 weist auf einer Flachseite ein Schaltelement in Form eines Schaltnoppens 28 auf, der in einer bestimmten Winkelstellung der Scheibe 12 mit einer elastisch aufgehängten Schalteinrichtung 30 zusammenwirkt. Die Schalteinrichtung 30 ist in einer zur Scheibe 12 parallelen Ebene verschwenkbar und mechanisch und elektrisch mit einem elektrischen Schaltkontakt (nicht dargestellt) verbunden. Vorzugsweise ist diese Verbindung als mechanisch entlastete Schweißnaht ausgestaltet. In einem Schaltbereich 32 der Schalteinrichtung 30 sind ein erster Kontakt 34 und ein zweiter Kontakt 36 angeordnet. Ein abgewinkelter Anlagebereich 38 in einem mittleren Abschnitt der Schalteinrichtung 30 ist so geformt, dass der Schaltnoppen 28 bei dessen Erreichen die Schalteinrichtung 30 mit dem ersten Kontakt 34 elektrisch miteinander verbindet. Daraus resultiert, dass der elektrische Antriebsmotor 20 abgeschaltet wird. Funktionsmäßig entspricht die in Figur 1 gezeigte Ausführungsform einem herkömmlichen Dreischleifer-Parkstellungssystem, bei dem ein Parkstellungslauf des Antriebsmotors 20 über drei Schleifkontakte mit ihren zugeordneten Kontaktscheiben durchgeführt wird.

Während eines Wischbetriebs der Scheibenwischanlage wird die Schalteinrichtung 30 durch den Schaltnoppen 28 blind angetrieben. Dies bedeutet, dass der mit der Schalteinrichtung 30 verbundene elektrische Schaltkontakt nicht auf ein definiertes elektrisches Potential gelegt wird, so dass durch das Betätigtwerden der Schalteinrichtung 30 durch den Schaltnoppen 28 keinerlei elektrische Schalthandlungen generiert werden. Die Ausführungsform von Figur 1 verdeutlicht eine Variante, bei der die Parklage des Wischerarms über den mit der Schalteinrichtung 30 zusammenwirkenden Schaltnoppen 28 definiert wird.

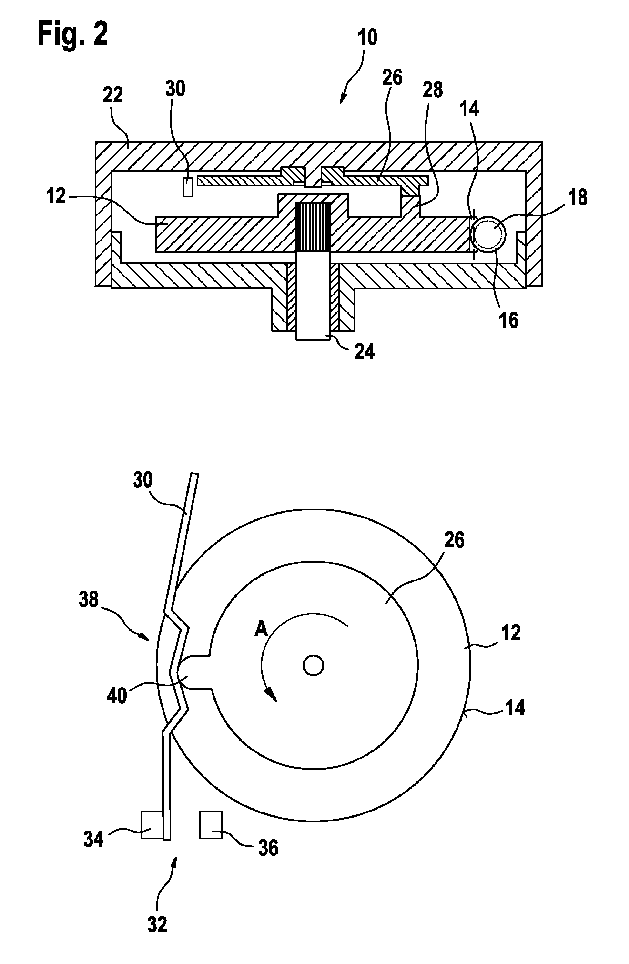

Figur 2 zeigt eine zweite Ausführungsform des erfindungsgemäßen Antriebs, die eine zusätzliche Schneelastsicherung aufweist. Wird eine Schwenkbewegung des Wischerarms durch eine äußere Last, beispielsweise durch eine Schneelast in Form eines Schneekeils auf der Windschutzscheibe erschwert oder durch Vereisung der Windschutzscheibe oder der Wischerblätter vollständig verhindert, so besteht die Gefahr, dass der elektrische Antriebsmotor 20 aufgrund eines permanenten Ein/Ausschaltens beschädigt wird.

Die Schneelastsicherung kann beispielsweise als ein Mitnehmer 26 ausgebildet sein, der als eine unidirektionale Kopplung zwischen dem Mitnehmer 26 und dem Übertragungselement 12 wirkt. Der Mitnehmer 26 wird dabei von dem Schaltnoppen 28 nur in eine Richtung angetrieben. Eine auf dem Mitnehmer 26 angeordnete Schaltfahne 40 betätigt daraufhin die Schalteinrichtung 30, wobei bei einem regulären Wischbetrieb der Scheibenwischanlage die Schalteinrichtung 30 ebenso wie bei der ersten Ausführungsform blind mitläuft.

Der Mitnehmer 26 wird nur in eine Richtung angetrieben. Durch den auf der Windschutzscheibe vorhandenen Schneekeil kann der Mitnehmer 26 somit während eines Parkstellungslaufs durch ein etwaiges Zurückdrehen des Antriebsmotors 20 nicht mit zurückgedreht werden. Dadurch bleibt ein Parkstellungssignal erhalten, obwohl sich der Wischarm nicht in Parkposition befindet.

Im Parkstellungslauf, der durch ein Betätigen eines Lenkstockschalters bzw. einer Parkstellungselektronik ausgelöst wird, wirkt die Schaltfahne 40 des Mitnehmers 26 mit der Schalteinrichtung 30 derart zusammen, dass die Schaltfahne 40 in der muldenförmigen Ausnahme der Schalteinrichtung 30 zum Stillstand kommt. Dies entspricht dem Erreichen der Parkstellung der Scheibenwischanlage, wodurch der erste Kontakt 34 (beispielsweise auf Masse geschaltet) und der mit der Schalteinrichtung 30 verbundene elektrische Kontakt elektrisch verbunden werden. Auf diese Weise wird der Antriebsmotor 20 in der Parkstellung der Scheibenwischanlage definiert abgeschaltet. Mit Hilfe der Schneelastsicherung kann also vorteilhaft erreicht werden, dass der Antriebsmotor 20 bei erstmaligem Erreichen der Parkstellung dauerhaft und sicher abgeschaltet wird.

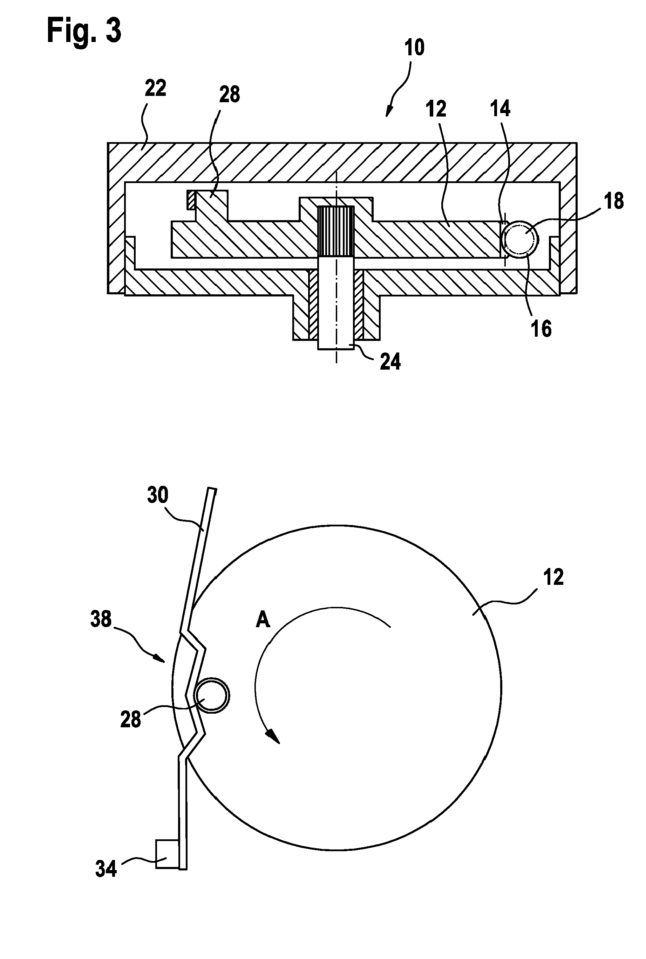

Figur 3 zeigt eine dritte Ausführungsform des erfindungsgemäßen Antriebs. Diese unterscheidet sich von der in Figur 1 dargestellten ersten Ausführungsform dadurch, dass anstelle der beiden elektrischen Kontakte 34, 36 lediglich der erste Kontakt 34 vorgesehen ist. Ein derartiges System entspricht einem herkömmlichen Zweischleifer-Parkstellungssystem, bei dem die Parkstellung des Wischerarms dadurch definiert ist, dass der erste Kontakt 34 elektrisch mit dem mit der Schalteinrichtung 30 verbundenen Kontakt verbunden ist. Das Betätigen der Schalteinrichtung 30 erfolgt in identischer Weise zur ersten Ausführungsform mithilfe des Schaltnoppens 28.

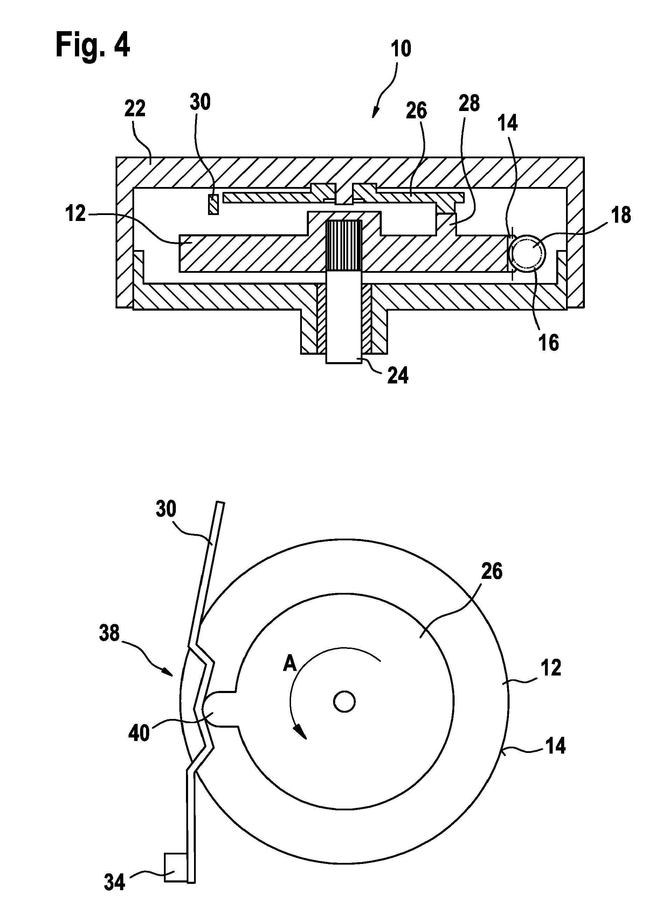

Figur 4 zeigt eine vierte Ausführungsform des erfindungsgemäßen Antriebs. Diese Ausführungsform unterscheidet sich von der anhand von Figur 2 beschriebenen zweiten Ausführungsform lediglich dadurch, dass ebenso wie bei der dritten Ausführungsform anstelle der beiden elektrischen Kontakte 34, 36 nur der erste Kontakt 34 vorgesehen ist. Diese Ausführungsform entspricht funktionsmäßig ebenso wie die in Figur 3 gezeigte Ausführungsform einem herkömmlichen Zweischleifer-Parkstellungssystem, diesmal jedoch mit einer Schneelastsicherung in Form des Mitnehmers 26. Die Funktion der Schneelastsicherung wird in gleicher Weise wie anhand von Figur 2 beschrieben bereitgestellt.

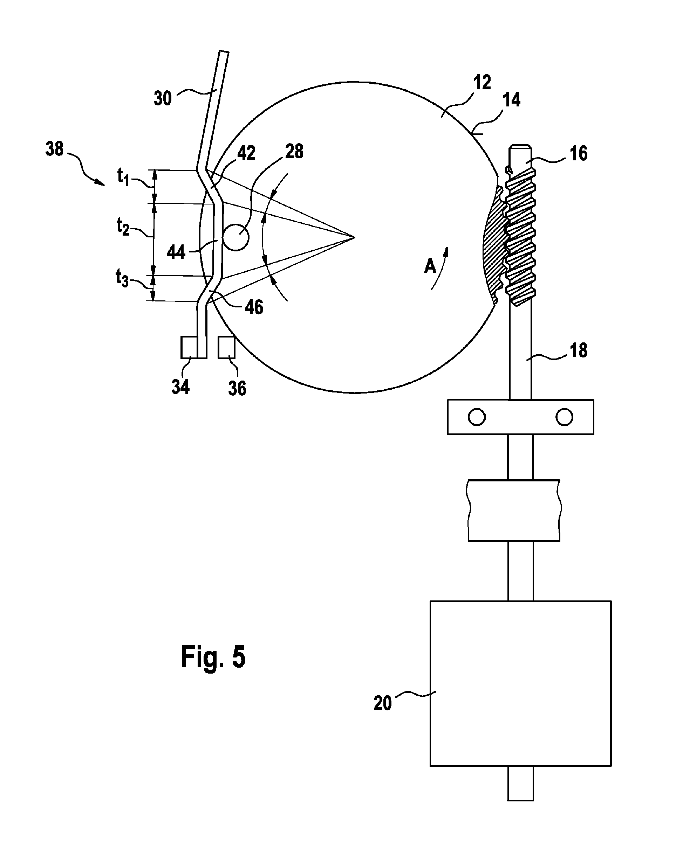

Figur 5 verdeutlicht eine bevorzugte geometrische Ausgestaltung der Schalteinrichtung 30. Bei einer Kontaktierung eines Anlagebereichs 38 mit dem Schaltnoppen 28 an einer ersten, abgeschrägten Rampe 42 wird die Schalteinrichtung 30 elastisch verformt, so dass der mit der Schalteinrichtung 30 verbundene Kontakt und der zweite Kontakt 36 elektrisch voneinander getrennt werden. Ein dadurch ausgelöstes elektrisches Schaltsignal kann als Auslösesignal zum Starten eines Parkstellungslaufs des Antriebsmotors 20 benutzt werden. Die relative Lage des Schaltnoppens 28 zum Anlagebereich 38 sowie deren Abmessungen können vorteilhaft zur Definition des Parkstellungslaufs herangezogen werden.

Ein mittlerer Abschnitt 44 zwischen der ersten Rampe 42 und einer zweiten Rampe 46 muss ausreichend lang sein, damit auch eine sich schneller drehende Scheibe 12 nach dem Abschalten des Antriebsmotors 20 nicht durch Trägheitsmomente über den Anlagebereich 38 hinaus gedreht wird, sondern innerhalb des Weges, den der Schaltnoppen 28 entlang des mittleren Abschnitts 44 zurücklegt, zum Stillstand kommt. Wahlweise kann der mittlere Abschnitt 44 muldenförmig ausgestaltet sein, wie dies anhand der Figuren 2 und 4 angedeutet ist, wodurch eine leichte Rastwirkung zwischen der Schalteinrichtung 30 und der Schaltfahne 40 des Mitnehmers 26 bzw. dem Schaltnoppen 28 erreicht werden kann.

Figur 5 zeigt Schaltzeiten t1, t2 und t3 in Bezug auf entsprechend gekennzeichnete Abschnitte des Anlagebereichs 38 der Schalteinrichtung 30. Dabei ist die erste Schaltzeit t1 einer Kontaktdauer des Schaltnoppens 28 bzw. der Schaltfahne 40 mit der ersten Rampe 42 zugeordnet. Die zweite Schaltzeit t2 und die dritte Schaltzeit t3 sind Kontaktdauern des Schaltnoppens 28 bzw. der Schaltfahne 40 mit dem mittleren Abschnitt 44 bzw. mit der zweiten Rampe 46 zugeordnet. Funktionsmäßig entspricht die erste Schaltzeit t1 einem Übergang von einer Bestromung des Antriebsmotors 20 zur Parkstellung. Die zweite Schaltzeit t2 entspricht funktionsmäßig einem geschalteten Bereich, also einer Zeit, während der der Wischerarm in Parkstellung gehalten wird. Die dritte Schaltzeit t3 entspricht funktionsmäßig einem Wechsel von der Parkstellung zur Bestromung des Antriebsmotors 20.

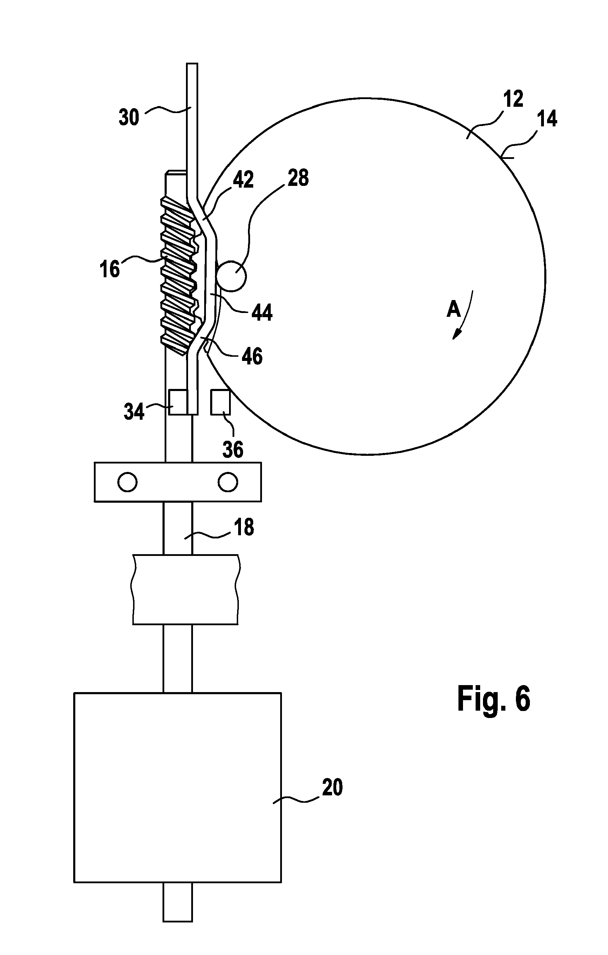

Figur 6 zeigt ein fünftes Ausführungsbeispiel des erfindungsgemäßen Antriebs. Bei dieser Variante verläuft die Drehrichtung A der mit der Schalteinrichtung 30 zusammenwirkenden Scheibe 12 im Uhrzeigersinn. Sinnvoll ist diese Variante bei Antrieben für eine Scheibenwischanlage, bei der eine im Vergleich zu den Figuren 1 bis 5 unterschiedliche Drehrichtung A der Scheibe 12 vorgesehen ist. Dies kann beispielsweise bei Fahrzeugen erforderlich sein, bei denen das Lenkrad in Fahrtrichtung rechts angeordnet ist und die Scheibenwischanlage eine zur üblichen Getriebelage unterschiedliche Getriebelage aufweist. Man erkennt, dass es bei dieser Variante sinnvoll ist, die Längen der den Rampen 42, 46 zugeordneten Schaltzeiten t1, t3 identisch auszugestalten, so dass die Schalteinrichtung 30 unabhängig von der Drehrichtung A der Scheibe 12 verwendbar ist. Es ist auf diese Weise also vorteilhaft unerheblich, von welcher Seite der Schaltnoppen 28 bzw. die Schaltfahne 40 auf die Rampen 42, 46 der Schalteinrichtung 30 einwirkt.

Vorteilhaft kann auf diese Weise eine Komponentenvielfalt bei unterschiedlichen Drehrichtungen der Antriebsmotoren 20 für die Scheibenwischanlagen reduziert werden.

Der besondere Vorteil der vorliegenden Anordnung liegt im einfachen Aufbau, mit dem sich zahlreiche unterschiedliche Konfigurationen und Schaltzeiten erzielen lassen. Durch individuelle Ausgestaltungen der Schaltnoppe 28 und der Schalteinrichtung 30 lässt sich ein Standardgetriebe an viele unterschiedliche Fahrzeugtypen anpassen, bei denen jeweils unterschiedliche Schaltzeiten und Winkelstellungen der Parkstellung erforderlich sind. Gegebenenfalls kann die Scheibe 12 mit dem darauf angeordneten Schaltnoppen 28 als Standardbauteil für alle Typen gleichermaßen Verwendung finden, so dass unterschiedliche Schaltzeiten und Parkstellungen allein durch die Ausgestaltung der Schalteinrichtung 30, deren Anordnung in Bezug auf den Schaltnoppen 28 sowie durch die Variation des Anlagebereichs 38 realisiert werden können.

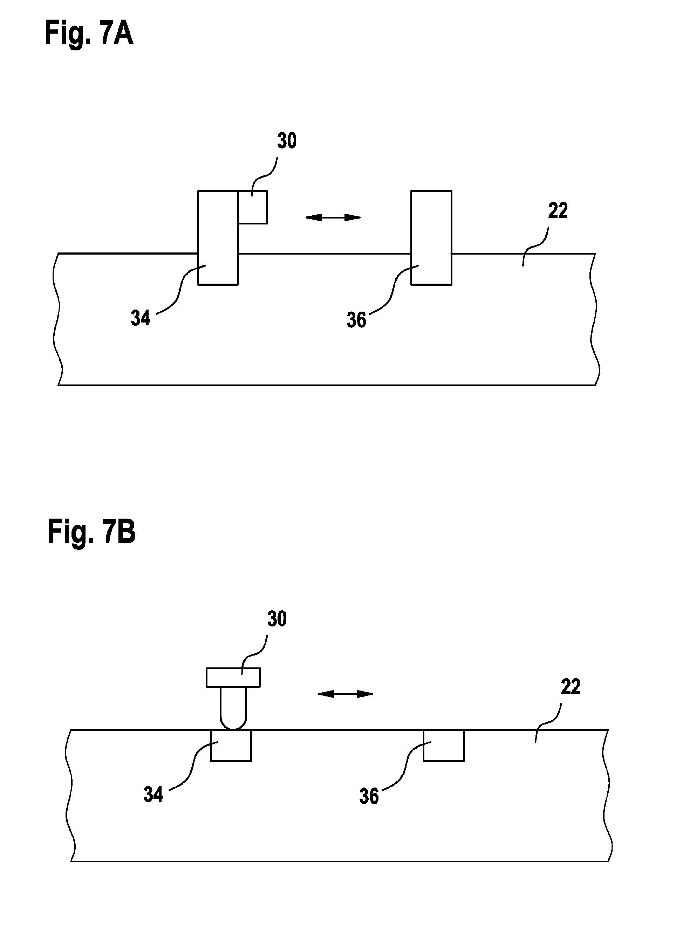

Figur 7A zeigt eine erste Variante einer Ausgestaltung der Schalteinrichtung 30 und der elektrischen Kontakte 34, 36. Ein Doppelpfeil deutet an, wie die Schalteinrichtung 30 zwischen den elektrischen Kontakten 34, 36 hin- und hergeschaltet wird. Daraus resultiert vorteilhaft ein sehr geringer Verschleiß der elektrischen Kontakte 34, 36 und der Schalteinrichtung 30. Dadurch ergibt sich eine hohe Reproduzierbarkeit des Schaltverhaltens sowie eine hohe Genauigkeit für die Parkstellung des Wischerarms. Ein bei herkömmlichen Parkstellungssystemen erforderlicher Sicherheitswinkel, der durch eine Abnützung der herkömmlichen Schleifkontakte bzw. der Kontaktscheiben erforderlich ist, kann mit der erfindungsgemäßen Anordnung somit vorteilhaft minimiert werden.

Figur 7B zeigt eine weitere Variante der Schalteinrichtung 30 in Zusammenwirkung mit den elektrischen Kontakten 34, 36. Ein Doppelpfeil deutet an, wie die Schalteinrichtung 30 zwischen den Kontakten 34, 36 auf dem Getriebedeckel 22 hin- und hergeschaltet wird. Verglichen mit den herkömmlichen Schleifkontakten und Kontaktscheiben ist ein Abnützungsgrad der Kontakte 34, 36 durch die Schalteinrichtung 30 vorteilhaft verringert.

Als vorteilhaft wird beim erfindungsgemäßen Antrieb angesehen, dass im Vergleich zu herkömmlichen Parkstellungssystemen ein sehr geringer Verschleiß der beweglichen Teile und der elektrischen Kontakte mit daraus resultierenden sehr konstanten Schaltzeiten erreichbar ist. Dies wird vor allem dadurch erreicht, dass anstelle der herkömmlichen Schleifkontakte und Kontaktscheiben eine feste Schalteinrichtung 30 vorgesehen ist, die je nach Funktionsweise (Zwei- oder Dreischleifer-Parkstellungssystem) als Schließer (entsprechend dem Zweischleifer-Parkstellungssystem) oder als Wechsler (entsprechend dem Dreischleifer-Parkstellungssystem) einsetzbar ist.

Weiterhin wird bei der vorliegenden Erfindung als vorteilhaft angesehen, dass im Vergleich zu herkömmlichen Parkstellungssystemen ein Rationalisierungspotential hinsichtlich einer Komponentenvielfalt ausgeschöpft werden kann. Dies resultiert aus der Tatsache, dass Scheiben 12 für verschiedene Antriebsleistungsklassen einheitlich verwendbar sind. Die Scheibe 12 wird dadurch zu einem Baukastenteil, was bedeutet, dass für jede Baugröße des Antriebs nur eine einheitlich ausgebildete Scheibe 12 erforderlich ist. Diese Reduzierung der Komponentenvielfalt führt in vorteilhafter Weise zu einer Verringerung von Herstellungs- und Lagerkosten.

Als vorteilhaft wird weiterhin angesehen, dass der erfindungsgemäße Antrieb für herkömmliche Zweischleifer- und Dreischleifersysteme jeweils mit oder ohne Schneelastsicherung eingesetzt werden kann. Für die Ausgestaltung des Antriebs mit Schneelastsicherung ist es lediglich erforderlich, dass ein entsprechender Mitnehmer 12 in das Getriebegehäuse eingebaut wird. Eine Vereinfachung einer Realisierung unterschiedlichster Antriebe für eine Scheibenwischanlage eines Fahrzeugs ist auf diese Weise unterstützt.

Weiterhin wird als vorteilhaft angesehen, dass die im Vergleich zu herkömmlichen Parkstellungssystemen erforderlichen Sicherheitswinkel (bedingt durch Abnützung der Schleifkontakte und Kontaktscheiben) minimiert sind, was insbesondere in genau reproduzierbaren Parkstellungsläufen und Parkstellungen des Wischerarms resultiert.

Als vorteilhaft wird weiterhin angesehen, dass der erfindungsgemäße Antrieb mit herkömmlichen Lenkstockschaltern in Form von elektromechanischen Relais und mit elektronischen Parkstellungseinrichtungen elektrisch verbunden und angesteuert werden kann. Eine Vielfalt von kundenabhängigen Realisierungswünschen ist auf diese Weise unterstützt. Der erfindungsgemäße Antrieb ist auf diese Weise sehr universell einsetzbar.

Die in den Ansprüchen, der Beschreibung und den Zeichnungen offenbarten Aspekte der Erfindung können sowohl einzeln als auch in beliebiger Kombination für die Erfindung wesentlich sein.

## Patentansprüche

1. Antrieb für eine Scheibenwischanlage eines Fahrzeugs, umfassend einen Antriebsmotor (20), dessen Motorantriebswelle (18) in Wirkverbindung mit einem Übertragungselement (12) steht, das drehfest mit einer Abtriebswelle (24) eines Wischerarms der Scheibenwischanlage verbunden ist, wobei der Abtriebswelle (24) eine definierte bzw. definierbare Winkellage des Wischerarms zugeordnet ist, **dadurch gekennzeichnet, dass** die Winkellage einer Parkstellung des Wischerarms mit einem Schaltelement (28) des Übertragungselements (12) definierbar ist, wobei mit dem Schaltelement (28) ein elektrischer Kontakt (34, 36) schaltbar ist.

2. Antrieb nach Anspruch 1, **dadurch gekennzeichnet, dass** das Übertragungselement (12) als Rotationskörper, insbesondere als eine Scheibe ausgebildet ist.

3. Antrieb nach Anspruch 1 oder 2, **dadurch gekennzeichnet, dass** das Schaltelement (28) als Noppen ausgebildet ist, der auf dem Übertragungselement (12) angeordnet ist.

4. Antrieb nach einem der Ansprüche 1 bis 3, **dadurch gekennzeichnet, dass** das Schaltelement (28) mit einer beweglich aufgehängten Schalteinrichtung (30) zusammenwirkt, mit der der elektrische Kontakt (34, 36) geöffnet oder geschlossen wird.

5. Antrieb nach einem der vorangehenden Ansprüche, **dadurch gekennzeichnet, dass** in einem Schaltbereich (32) der Schalteinrichtung (30) wenigstens eine Kontaktfläche angeordnet ist.

6. Antrieb nach einem der Ansprüche 4 oder 5, **dadurch gekennzeichnet, dass** die Schalteinrichtung (30) in einer zum Übertragungselement (12) im wesentlichen parallelen Ebene verschwenkbar ist.

7. Antrieb nach einem der Ansprüche 4 bis 6, **dadurch gekennzeichnet, dass** die Schalteinrichtung (30) einen muldenartigen Aufnahmebereich für das Schaltelement (28) aufweist.

8. Antrieb nach einem der vorangehenden Ansprüche, **dadurch gekennzeichnet, dass** zwischen der Motorantriebswelle (18) und der Abtriebswelle (24) für den Wischerarm eine Schneelastsicherungseinrichtung (26) vorgesehen ist.

9. Antrieb nach Anspruch 8, **dadurch gekennzeichnet, dass** die Schneelastsicherungseinrichtung (26) mit der Schalteinrichtung (30) derart zusammenwirkt, dass bei einer Auslenkung der Schalteinrichtung (30) der elektrische Kontakt (34, 36) geöffnet oder geschlossen wird.

10. Antrieb nach einem der vorangehenden Ansprüche, **dadurch gekennzeichnet, dass** der Antrieb elektrisch mit einer elektromechanischen oder mit einer elektronischen Ansteuerungseinrichtung verbunden ist und mit dieser elektrisch zusammenwirkt.
